# EUROPEAN PATENT APPLICATION

(11) **EP 4 744 944 A2**
(43) Date of publication of application: **20.05.2026**
(21) Application number: 25211780.9
(22) Date of filing: 28.10.2025
(51) Int. Cl.: B60L 50/64, B60L 58/20, H02J 1/082

(54) **POWER STRING MODULES AND METHODS FOR USING AND MAKING THE SAME**

(30) Priority: 13.11.2024 US 202463719957 P; 12.09.2025 US 202519327520
(71) Applicant: Cummins, Inc., Columbus, Indiana 47201 (US)
(72) Inventor: Korsness, Joshua, Columbus, 47201 (US); Flaherty, Michaela, Columbus, 47201 (US); Doran, Jarod, Columbus, 47201 (US); Desai, Krunal, Columbus, 47201 (US); Sturmer, Paul, Columbus, 47201 (US); Benson, Stuart, Columbus, 47201 (US)
(74) Representative: Cleveland Scott York

(57) **Abstract**

In an implementation, an apparatus includes an enclosure (101A, 101B) and an energy module (104A, 104B) included in the enclosure and that includes a battery pack configured to provide an initial voltage. The apparatus further includes a conversion module (106A, 106B) included in the enclosure and that includes a high voltage DC/DC converter (108A, 108B) and an ultra-high voltage DC/DC converter (110A, 110B). The conversion module is configured to receive the initial voltage and output a converted voltage using the high voltage DC/DC converter and the ultra-high voltage DC/DC converter.

## Description

### CROSS-REFERENCE TO RELATED APPLICATIONS

The present application claims the benefit of and priority to U.S. Provisional Application No. 63/719,957, filed November 13, 2024.

### BACKGROUND

Implementations described herein related to electric power systems, and more particularly, power string modules that enclose batteries and converters.

Despite contributing to harmful anthropogenic greenhouse gas emissions, the energy source for the most vehicles, stationary power systems, etc. continues to be the burning of fossil fuels in internal combustion engines. To abate greenhouse gas emissions, there has been a recent push to move from fossil fuel (e.g., diesel) powered vehicles and/or stationary power systems to hybrid and/or fully electric vehicles and/or stationary power systems.

Certain challenges continue to hinder the wide-spread adoption of alternative power sources. For example, for electric vehicles to achieve the same range as fossil fuel powered vehicles, larger, heavier batteries are often used. Further, the challenges of powering electric vehicles increase as the vehicle get larger, heavier, and applied in off-road situations. For example, as the vehicle scales up (or as power demands increase for some implementations such as stationary power systems, etc.), the battery to be used to power the vehicle/system can get heavier, larger, use more energy, get hotter, become more of a safety hazard, take longer to charge, be subject to stricter regulations and standards, and/or the like. Moreover, the higher voltages that are used in such power systems can increase safety risks, thermal management complexity (e.g., given the increased heat generation), undesired electromagnetic interference, weight and stress on components, and/or the like. These challenges become pronounced when, for example, these power systems (e.g., the power systems included in mining vehicles/equipment, locomotives, marine vessels, and/or the like) are used in off-highway settings or in other potentially harsh environments. The off-road settings or environmental effects can increase, for example, the risk of water damage to the batteries, the risk of mechanical damages due to bumpy terrain, the risk of fire due to overheating or shorting, and/or the like, and often call for robust and/or ruggedized designs.

The challenges are yet further amplified in situations where an existing vehicle or power system is being retrofitted. For example, a "clean sheet" design for a mining haul truck powered by an alternative power source (e.g., a hybrid diesel/battery powerplant, a hybrid hydrogen/battery powerplant, an all-electric powerplant, etc.) would entail substantial expense and long lead times before such trucks could be deployed in volume to mining sites, delaying the environmental and cost benefits of powering such vehicles with alternative power sources rather than with fossil fuels such as diesel. Similarly, modifying existing stationary power systems to be electric would entail substantial expenses and lead times. Rather than redesigning an electric off-highway vehicle or stationary power system from scratch and accounting for some of the challenges in advance, vehicles or stationary power systems can be retrofit or at least partially retrofit to include such alternative power sources. Retrofitting an existing vehicle or stationary power system, however, poses unique challenges, such as compatibility issues, space constraints, centralized control systems, and/or the like.

Some hybrid and/or electric vehicles use battery packs. Some battery packs, however, were not designed for use in industrial and/or large-scale implementations and therefore, may not be optimized for such use. For example, some battery packs may use enclosures that don't include voltage and/or current regulation, conversion, etc. as integrating such devices may not be needed or desirable in smaller scale applications. Instead, the battery power/storage and regulation/conversion devices exist as separate components disposed in separate enclosures. Using a separate enclosure to handle voltage conversion, however, can add complexity to wiring harnesses (e.g., since properly sealing and protecting multiple enclosures can be more complex than properly sealing and protecting a single, integrated enclosure), cooling (e.g., since multiple, separate enclosures can use separate cooling systems, which can complicate heat management), and integration (e.g., to ensure all enclosures work together; separate enclosures can use additional wiring and connections between the enclosures, which increases the risk of failure and introduces potential points of vulnerability).

Accordingly, it can be desirable to combine battery energy and voltage with hardware for DC/DC conversion into a single product rather than separate products. Further, it can be desirable for such a single product to be retrofittable into existing vehicles, particularly large off-highway vehicles, and/or other large power systems (e.g., stationary power systems).

### SUMMARY

In one implementation, an apparatus includes an enclosure and an energy module included in the enclosure. The energy module includes a battery pack configured to provide an initial voltage. The apparatus further includes a conversion module included in the enclosure. The conversion module includes a high voltage DC/DC converter and an ultra-high voltage DC/DC converter. The conversion module is configured to receive the initial voltage and output a converted voltage using the high voltage DC/DC converter and the ultra-high voltage DC/DC converter.

The high voltage DC/DC converter may be configured to receive the initial voltage and to generate an intermediate voltage, and the ultra-high voltage DC/DC converter may be configured to receive the intermediate voltage and to generate the converted voltage.

The enclosure may be a single enclosure.

The enclosure may be configured to protect a proper orientation of the energy module and the conversion module.

The energy module and the conversion module may be electrically coupled and positioned within the enclosure such that one or more creepage requirements or clearance requirements are satisfied.

The energy module may be a first energy module, the conversion module may be a first conversion module, and the first energy module and the first conversion module may be included in a first power string module included in the enclosure. In this case, the apparatus may further comprise:
a second energy module; and
a second conversion module, the second energy module and the second conversion module included in a second power string module included in the enclosure.

The first power string module may be positioned within a first enclosure and the second energy module may be positioned within a second enclosure.

The enclosure may be an apparatus enclosure, the energy module may be a first energy module, and the conversion module may be a first conversion module, the first energy module and the first conversion module may be included in a first power string module, the first power string module may be positioned within a first enclosure, and the apparatus may further comprise:
a second energy module; and
a second conversion module electrically coupled to the second energy module.

The second energy module and the second conversion module may be positioned within a second enclosure, and the first enclosure and the second enclosure may be positioned within the apparatus enclosure.

The first energy module and the first conversion module may be included in a first power string module positioned within the first enclosure. The second energy module and the second conversion module may be included in a second power string module positioned within the second enclosure. The first enclosure and the second enclosure may be removably positioned within the apparatus enclosure, such that the first power string module and the second power string module are selectively removable from the apparatus.

In another implementation, a method, comprises:
providing, via a first module included in an enclosure, an initial voltage;
receiving, at a first DC/DC converter included in the enclosure, the initial voltage to generate an intermediate voltage; and
receiving, at a second DC/DC converter included in the enclosure, the intermediate voltage to generate a converted voltage.

The enclosure may be included in a diesel/battery hybrid vehicle.

The diesel/battery hybrid vehicle may be one of a mining haul truck, a locomotive, or a marine vessel.

The first module may be a first energy module, comprising one or more battery packs configured to generate the initial voltage and one or more battery management systems configured to selectively connect and disconnect the one or more battery packs.

The first DC/DC converter and the second DC/DC converter may be included in a first conversion module, the first conversion module further comprising a switch, a battery management system regulator, and a battery power string controller, the first conversion module configured to receive the initial voltage and generate the converted voltage.

In a further implementation, an electric power system comprises:
a power source electrically coupled to a high voltage routing channel and the electric power system and configured to generate electrical power, the power source comprising:
a plurality of energy modules configured to generate an initial voltage;
a plurality of conversion modules each electrically coupled to an energy module of the plurality of energy modules, the plurality of conversion modules configured to receive the initial voltage and generate a converted voltage, and wherein:
   each energy module and coupled conversion module define a power string module of a plurality of power string modules;
   each power string module is positioned within an enclosure of a plurality of enclosures; and
   each power string module is electrically coupled to the high voltage routing channel.

The plurality of enclosures may be removably coupled to the power source, such that the plurality of power string modules are selectively removable from the power source.

The plurality of energy modules may further comprise:
a plurality of battery packs configured to generate the initial voltage; and
one or more battery management systems operably coupled to the plurality of battery packs and configured to selectively engage the plurality of battery packs.

The plurality of conversion modules may further comprise:
a switch configured to electrically engage the conversion model with a corresponding energy module;
a plurality of DC/DC converters configured to receive the initial voltage and generate the converted voltage;
a battery management system regulator configured to regulate the one or more battery management systems of the corresponding energy module; and
a battery power string controller configured to control at least one of the plurality of battery packs or the one or more battery management systems of the corresponding energy module.

The energy module and the conversion module may be positioned within the enclosure such that one or more creepage requirements or clearance requirements are satisfied.

Each power string module of the plurality of power string modules may be positioned within a respective enclosure of the plurality of enclosures and coupled to the high voltage routing channel such that each power string module can be removed and replaced within the electric power system by removing and replacing one or more enclosures of the plurality of enclosures.

Features of one implementation may be provided with any other implementation. Apparatus features may be provided with the method implementations and vice versa.

### BRIEF DESCRIPTION OF THE DRAWINGS

FIG. 1 illustrates a system block diagram of at least a portion of an electric power system, according to an implementation.
FIG. 2 illustrates a flowchart of a method to generate a converted voltage, according to an implementation.
FIG. 3 illustrates a circuit diagram of a power string module, according to an implementation.
FIG. 4 illustrates a power source/sink of an electric power system that is shown electrically coupled to a high voltage routing channel, according to an implementation.
FIG. 5 illustrates a conversion module and an energy module being in separate enclosures.
FIG. 6A illustrates a power string module of an electric power system, according to an implementation.
FIG. 6B illustrates an inboard view of the power string module from FIG. 6A.
FIG. 6C illustrates an outboard view of the power string module from FIG. 6A.
FIG. 6D illustrates various components of the power string module from FIG. 6A disposed in an enclosure.
FIG. 6E illustrates a bottom view of a portion of the components of the power string module from FIG. 6A disposed in the enclosure.
FIG. 6F illustrates a top view of a portion of the components of the power string module from FIG. 6A disposed in the enclosure.
FIG. 7A illustrates a side view of a portion of a vehicle including an electric power system.
FIGS. 7B and 7C illustrate a perspective inboard view and a perspective outboard view, respectively, of a portion of the electric power system of FIG. 7A, showing a set of energy modules and a separate set of conversion modules.
FIG. 7D illustrates an enlarged side view of the electric power system of FIG. 7A.
FIG. 8A illustrates a perspective outboard view of at least a portion of an electric power system of a vehicle including a set of power string modules, according to an implementation.
FIG. 8B illustrates a perspective outboard view of at least a portion of the electric power system of FIG. 8A with certain components removed to better show the power string modules housed within an enclosure.
FIGS. 8C and 8D illustrate a perspective inboard view and a perspective outboard view, respectively, of the portion of the electric power system of FIG. 8A showing electrical connections associated with the multiple power string modules.
FIG. 9 illustrates a perspective view of at least a portion of an electric power system, according to an implementation.

### DETAILED DESCRIPTION

Some implementations are related to power string modules. The power string modules can be configured, for example, to provide power to an electric vehicle (or hybrid electric vehicle). In some implementations, the vehicle can be, for example, a mining haul truck, a locomotive, a marine vessel, and/or other large-scale industrial vehicle (e.g., an ultra-class vehicle). Additionally or alternatively, in some implementations, the power string modules can be retrofitted into an existing vehicle. For example, a fossil fuel powered vehicle such as a vehicle with a diesel combustion engine can be retrofit to include the power string modules (e.g., retrofit into a diesel/battery hybrid powerplant). Alternatively, a traditional combustion engine can be removed from an existing vehicle and the vehicle retrofit to include the power string modules (e.g., retrofit into an all-electric powerplant). Additionally or alternatively, in some implementations, the power string module can be configured to provide power to a vehicle configured to travel off-road in, for example, a mining environment. As another example, a fossil fuel-based stationary power system can be retrofit to include and/or can otherwise be supplemented or replaced with the power string modules described herein.

In some implementations, the power string module includes an enclosure of or for one or more energy modules (e.g., battery packs) and one or more conversion modules (e.g., voltage converters such as direct current (DC)/DC converters). In some implementations, the power string module is used, for example, to source and/or sink regulated high voltage DC power for hybrid electric vehicles (HEVs) and/or all-electric vehicles. In some implementations, battery packs and DC/DC conversion is integrated into one product, which addresses many of the previously mentioned deficiencies of having energy modules and conversion modules in separate enclosures.

In some implementations, a power string module has multiple battery packs. In some implementations, the power string module includes at least 14 battery packs. In some implementations, battery packs in a power string module can be removed and/or not installed (e.g., if not needed for a particular use case), providing for more adaptability (e.g., to retrofit to existing vehicles) compared to systems where all power components require full integration.

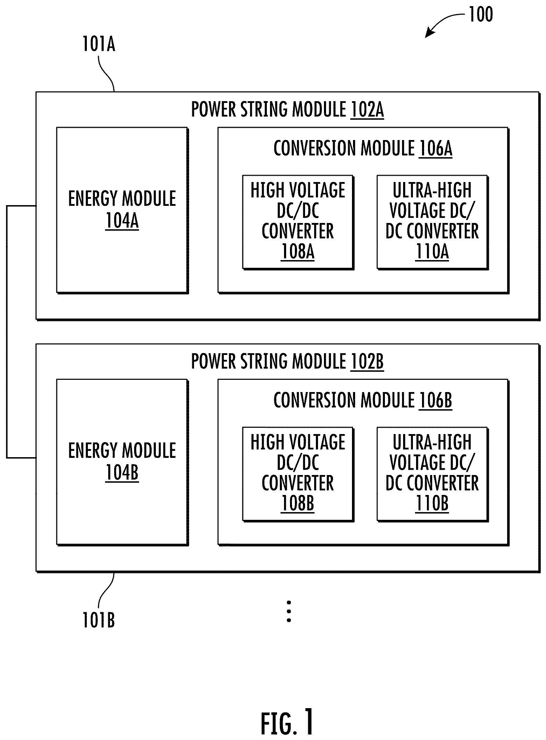

FIG. 1 illustrates a system block diagram of at least a portion of an electric power system 100 (also referred to herein as "system 100"), according to an implementation. The system 100 can include one or more power string modules, such as the power string module 102A and the power string module 102B. Each power string module can include an energy module and a conversion module within its own separate enclosure. In some implementations, the system 100 is included in a diesel/battery hybrid vehicle. The diesel/battery hybrid vehicle can be, for example, a mining haul truck, a locomotive, a marine vessel, or any other suitable diesel/battery hybrid vehicle. Alternatively the system 100 can be implemented in a stationary power system (e.g., a power generation plant). Accordingly, the vehicle, power generation plant, etc. can include electric components that are configured to be powered by one or more power string modules (e.g., power string module 102A, power string module 102B, and/or the like).

As shown in FIG. 1, the power string module 102A includes an enclosure 101A that houses and/or encloses an energy module 104A and a conversion module 106A (operatively coupled to one another). Similarly, the power string module 102B includes an enclosure 101B that houses and/or encloses an energy module 104B and a conversion module 106B (operatively coupled to one another). Each conversion module can include one or more DC/DC converters (e.g., a plurality of DC/DC converters, only two DC/DC converters, only one DC/DC converter, etc.). For example, the conversion module 106A includes a high voltage (e.g., 60 volts-direct current (VDC) to 1,500 VDC) DC/DC converter 108A and ultra-high voltage (e.g., above 1,500 VDC) DC/DC converter 110A, and the conversion module 106B includes a high voltage DC/DC converter 108B and ultra-high voltage DC/DC converter 110B. In some implementations, at least one DC/DC converter can include at least one buck converter and at least one boost converter. Although techniques described herein use high voltage and ultra-high voltage DC/DC converters to accommodate larger vehicles, other, lower voltage DC/DC converters can be used in some implementations (e.g., for smaller vehicles).

The energy module 104A can include one or more battery packs, and each of the one or more battery packs can include battery cells. In some implementations, multiple battery cells are used for the energy module 104A, and the multiple battery cells are in series (e.g., and not parallel). The one or more battery packs are configured to provide an initial voltage. The conversion module 106A is configured to receive the initial voltage and output a converted voltage using the high voltage DC/DC converter 108A and the ultra-high voltage DC/DC converter 110A. For example, the high voltage DC/DC converter 108A can be configured to receive the initial voltage from the energy module 104A and generate an intermediate voltage. Then, the ultra-high voltage DC/DC converter 110A can be configured to receive the intermediate voltage from the high voltage DC/DC converter 108A and generate the converted voltage.

Similarly, the energy module 104B can include one or more battery packs, and each of the one or more battery packs can include battery cells. The one or more battery packs are configured to provide an initial voltage. The conversion module 106B is configured to receive the initial voltage and output a converted voltage using the high voltage DC/DC converter 108B and the ultra-high voltage DC/DC converter 110B. For example, the high voltage DC/DC converter 108B can be configured to receive the initial voltage from the energy module 104B and generate an intermediate voltage. Then, the ultra-high voltage DC/DC converter 110B can be configured to receive the intermediate voltage from the high voltage DC/DC converter 108B and generate the converted voltage.

In some implementations, the energy modules 104A and/or 104B are configured to provide an initial voltage and the ultra-high voltage DC/DC converters 110A and/or 110B can be configured to receive the initial voltage and generate an intermediate voltage. Then, the high voltage DC/DC converters 108A and/or 108B can be configured to receive the intermediate voltage from the ultra-high voltage DC/DC converters 110A and/or 110B and generate the converted voltage. Accordingly, the DC/DC converters 108A and/or 108B can be configured to "boost" and/or "buck" an initial voltage.

In some implementations, each power string module includes and/or is housed in a separate enclosure. Said differently, the power string modules 102A and 102B are each in their own separate enclosures 101A and 101B, respectively, that include and/or house their own separate energy modules 104A and 104B, respectively, and conversion modules 106A and 106B, respectively. Accordingly, in some implementations, the power string module 102A can generate an initial voltage and output a converted voltage without being dependent on other circuitry outside the power string module 102A. Similarly, the power string module 102B can generate an initial voltage and output a converted voltage without being dependent on other circuitry outside the power string module 102B. By combining the components of each power string module into a single enclosure (e.g., the enclosure 101A or 101B), rather than keeping the energy components (e.g., energy module 104A) separate from the conversion components (e.g., conversion module 106A) using different enclosures, advantages are provided such as reduced complexity, improved cooling, improved harnessing, and/or the like. For example, when the components of each power string module are in a single enclosure, advantages may include the components and the power string modules having spacing to satisfy creepage and clearance requirements, reduced harnessing as a result of the proximity of the components within the enclosure, reduced external harnessing as a result of the internal harnessing, the enclosure protecting orientation of the components (e.g., vertical/horizontal for shock considerations, etc.), reduced assembly time of the system 100, as the enclosures can be easily removed and replaced, thereby removing and replacing the power string modules, and still other desirable parameters regarding the system 100. Although techniques described herein can be implied in various use cases, the advantages can be particularly desirable for off-highway hybrid/electric or all-electric vehicles given their demanding power and environmental requirements. For example, if the energy components and conversion components are housed in separate enclosures and the hybrid electric vehicle encounters a severe bump, there is a greater likelihood that one or both components become, for example, disconnected, improperly sealed, or improperly oriented. Moreover, having the energy components and conversion components housed in the same enclosure allows for increased flexibility, modularity, and/or compatibility. That is, having the energy components and conversion components house in the same enclosure allows for the energy components and conversion components to be interchanged and connected/disconnected from the system 100 quickly and leads to the energy components and conversion components taking up less space in the system 100, compared to when housed separately, promoting compatibility.

In some implementations, the system 100 includes an outer enclosure and/or support structure that houses the power string modules included in the system 100. For example, the outer enclosure and/or support structure can provide structures or features for mounting the power string modules to the vehicle. That is, all power string modules in the system 100 can be disposed in an outer enclosure and/or support structure that can protect the power string modules from external effects (e.g., debris, wind, water, etc.). In some implementations, however, such an enclosure or support structure can partially cover the power string modules while leaving other aspects of the power string modules exposed. For example, such an enclosure and/or support structure can leave the top portions of each power string module (or any other suitable portion) exposed to allow for physical and/or electric access, thermal management, and/or the like.

In some implementations, although not shown in FIG. 1, the system 100 can include and/or can be used with a cooling system. The cooling system can be configured to reduce a temperature of the components included in the power string modules 102A and 102B. Because techniques described herein can be applied in high voltage and/or ultra-high voltage situations, which can lead to increased heat generation, the cooling system can be used to regulate the temperature of the power string modules 102A and 102B (and/or one or more components thereof) within a predetermined acceptable range. In some implementations, a single cooling system is used to chill all the power string modules included in the system 100. Alternatively, the system 100 can include multiple cooling systems (or subsystems), where each power string module is chilled by a separate, individual, or dedicated cooling system (or subsystem). Alternatively, the system 100 can include separate, individual, or dedicated cooling systems (or subsystems) to chill the energy module and the conversion module of each power string module.

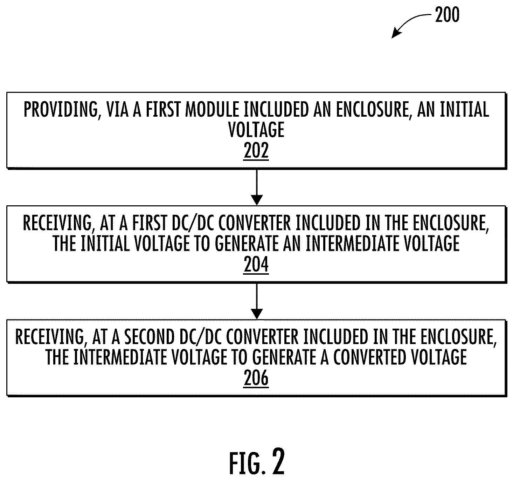

FIG. 2 illustrates a flowchart of a method 200 to generate a converted voltage, according to an implementation. At 202, an initial voltage is provided via a first module (e.g., energy module 104A) included in an enclosure (e.g., enclosure 101A) of a power string module. In some implementations, the power string module is included in a diesel/battery hybrid vehicle (e.g., a mining haul truck, a locomotive, a marine vessel, etc.). At 204, the initial voltage is received and an intermediate voltage is generated at a first DC/DC converter (e.g., high voltage DC/DC converter 108A) included in the enclosure. At 206, the intermediate voltage is received at a second DC/DC converter (e.g., ultra-high DC/DC converter 110A) included in the enclosure and a converted voltage is generated. The converted voltage can be, for example, greater than, equal to, or lesser than the initial voltage.

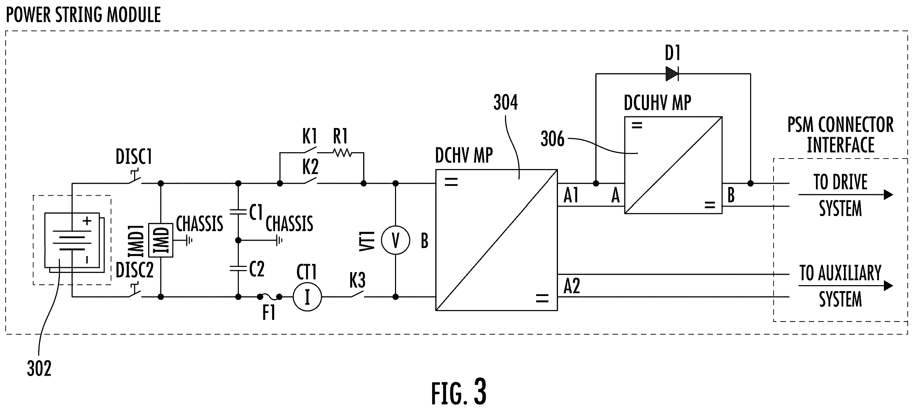

FIG. 3 illustrates a circuit diagram of a power string module (e.g., the power string modules 102A and/or 102B described above with reference to FIG. 1), according to an implementation. The circuit diagram shows, among other electric components, a voltage source 302 and power converters 304 and 306. In addition, the circuit can include electric components such as one or more disconnects (e.g., DISC1 and DISC2), one or more switches (e.g., K1, K2, and K3), one or more resistors (e.g., R1), one or more diodes (e.g., D1) protecting at least the second DC/DC converter, one or more fuses (e.g., F1, other fuses) configured to protect the electric components from overcurrent conditions, one or more insulation monitoring device (e.g., IMD1) configured to monitor the resistance between two or more conductors in the circuit, one or more voltage transducers (e.g., VT1) configured to sense voltage along at least a portion of the circuit, one or more current transducers (e.g., CT1) configured to sense current along at least a portion of the circuit, and/or the like. The IMD1, C1, and C2 can be connected to or grounded by the chassis of the vehicle.

The voltage source 302 can be, for example, a battery-based (e.g., lithium-ion based) onboard energy storage system including any number of battery packs. The voltage source 302 in FIG. 3 can be rated and/or can provide, for example, 504-910 volts (VDC) at 30.9 kWH, but other types of battery packs and/or other voltage and power ratings can be used in some implementations. Voltage generated by the voltage source 302 is received at the power converter 304 (e.g., a first power converter), which generates at least one output having an intermediate voltage. The intermediate voltage is then received at the power converter 306 (e.g., a second power converter), which outputs a converted voltage.

As shown in FIG. 3, the first power converter 304 can be a first DC/DC converter configured to receive voltage from the voltage source (e.g., battery packs), convert the voltage to the intermediate voltage, and provide one or more outputs of the intermediate voltage. The first power converter 304 can be configured such that a current associated with each voltage output is the same (or substantially the same) or different. For example, the first power converter 304 can have two outputs, one received by the second power converter 306, and the other received by one or more auxiliary systems. The first intermediate voltage output by the first power converter 304 can have a higher current (e.g., 950 VDC, at 360 amps) than the second intermediate voltage output (e.g., 950V, at 120 amps). The second power converter 306 (e.g., a second DC/DC converter) can receive the first intermediate voltage output by the first power converter 304 and convert the intermediate voltage to a converted voltage. The converted voltage can be, for example, an ultra-high voltage suitable for delivery to a drive system of an ultra-class vehicle or similar drive/power system (e.g., 2,400 VDC, at 200 amps). In addition, the auxiliary system can receive the second intermediate voltage output by the first power converter 304. For example, the auxiliary system is configured to power vehicle components that are not part of the drive system like lights, radio, air conditioning, windows, pumps, cooling system(s), and/or the like, while the drive system is configured to propel the vehicle (e.g., by converting the converted voltage into mechanical power to drive the wheels via one or more drive motors).

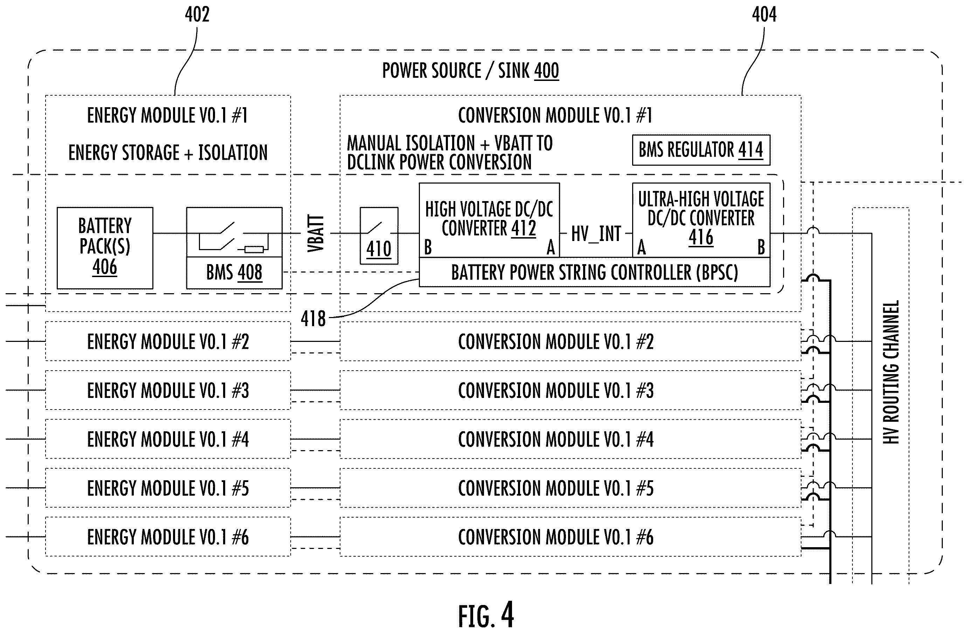

FIG. 4 illustrates a power source/sink 400 that is electrically coupled to a high voltage routing channel and part of an electric power system, according to an implementation. The power source/sink 400 can include the energy module 402 and the conversion module 404. Although not shown in FIG. 4, each energy module 402 and conversion module 404 pair can be combined into and/or disposed within one enclosure (e.g., rather than in separate enclosures). By combining into one enclosure, advantages such as improved volume efficiency, reduced mechanical complexity, a simplified interconnect and safety architecture, and less external high voltage routing can be achieved. For example, the energy module 402 and the conversion module 404 may be arranged such that there is spacing for creepage and clearance requirements, the spacing may also contribute to cooling and reduced total harnessing, and particularly, external harnessing, while the enclosure may protect orientation of the components of the energy module 402 and the conversion module 404 and reduce assembly time of the power source/sink 400 as the enclosure can be quickly removed and replaced, thereby replacing the energy module 402 and conversion module 404. The energy module 402 and conversion module 404 can be included in a first power string module, which further includes an enclosure that houses and/or encloses the energy module 402 and the conversion module 404. The power source/sink 400 can also include additional energy modules and conversion modules, as shown in FIG. 4. The additional energy modules and conversion modules can have a similar or substantially the same architecture as that of the energy module 402 and the conversion module 404 and each can be disposed in an enclosure to form any number of power string modules. Thus, the additional power string modules are not described in detail herein.

The energy module 402 can include one or more battery packs 406 and can be electrically coupled to a battery management system (BMS) 408. In some implementations, the energy module 402 can include, for example, 14 battery packs 406 connected in series. In other implementation, the energy module 402 can include more or fewer battery packs 406. Output from the energy module 402 can be received at the conversion module 404. The conversion module 404 includes a switch 410, which when closed, allows output from the energy module 402 to be received at the high voltage DC/DC converter 412. Output from the high voltage DC/DC converter 412 can then be received at the ultra-high voltage DC/DC converter 416. Battery power string controller (BPSC) 418 can also be electrically coupled to BMS 408 (e.g., to turn BMS 408 on or off and/or to otherwise disconnect the battery packs 406 by opening one or more circuits).

The BMS regulator 414 can be configured to regulate BMS 408. For example, the BMS regulator 414 can be configured to repeatedly (e.g., continuously, periodically, sporadically) monitor voltages, currents, temperatures, states of charges, and/or the like at the energy module 402 and/or the conversion module 404. In response to a predetermined trigger (e.g., overcharging, over-discharging, overheating, short circuits), the BMS regulator 414 can perform one or more actions and/or can cause one or more actions to be performed to address the trigger state (e.g., send an electric signal to BMS 408 to open the switch; activate a cooling system). In some implementations, the BMS regulator 414 is configured to be a controller.

As used herein, a "controller" (e.g., BPSC 418; BMS regulator 414) can include (or be) any suitable controller or control system. For example, the controller can be, and/or can be a portion of, a controller of the hybrid vehicle. That is to say, a control system of the vehicle can be used as and/or can be modified to function as the controller to control the operation of a power string module. The controller can include any and/or all suitable components to enable the operation of a control system. In some implementations, the controller can include at least a processor configured to execute instructions or code stored in a memory. Such a processor can be, for example, a hardware based integrated circuit (IC), or any other suitable processing device configured to run and/or execute a set of instructions or code. For example, the processor can be a general-purpose processor, a central processing unit (CPU), an accelerated processing unit (APU), an application specific integrated circuit (ASIC), a field programmable gate array (FPGA), a programmable logic array (PLA), a complex programmable logic device (CPLD), a programmable logic controller (PLC) and/or the like. In some implementations, processor can be configured to perform any of the methods and/or portions of methods discussed herein.

The controller can include any suitable memory or storage medium. For example, the memory can be or include a random-access memory (RAM), a memory buffer, a hard drive, a read-only memory (ROM), an erasable programmable read-only memory (EPROM), and/or the like. In some instances, the memory can store, for example, one or more software programs and/or code that can include instructions to cause the processor to perform one or more processes, functions, and/or the like. In some implementations, the memory can include extendable storage units that can be added and used incrementally. In some implementations, the memory can be a portable memory (e.g., a flash drive, a portable hard disk, and/or the like) that can be operatively coupled to the processor. In some instances, the memory can be remotely operatively coupled with a compute device (not shown). For example, a remote database device can serve as a memory and be operatively coupled to the compute device. The memory can include various components (e.g., machine-readable media) including, for example, a random-access memory (RAM) component, a read only component, and any combinations thereof. In one example, a basic input/output system (BIOS), including basic routines that help to transfer information between elements within a compute system (e.g., the controller), such as, for example, during start-up, can be stored in the memory. The memory can further include any number of program modules including, for example, an operating system, one or more application programs, other program modules, program data, and any combinations thereof.

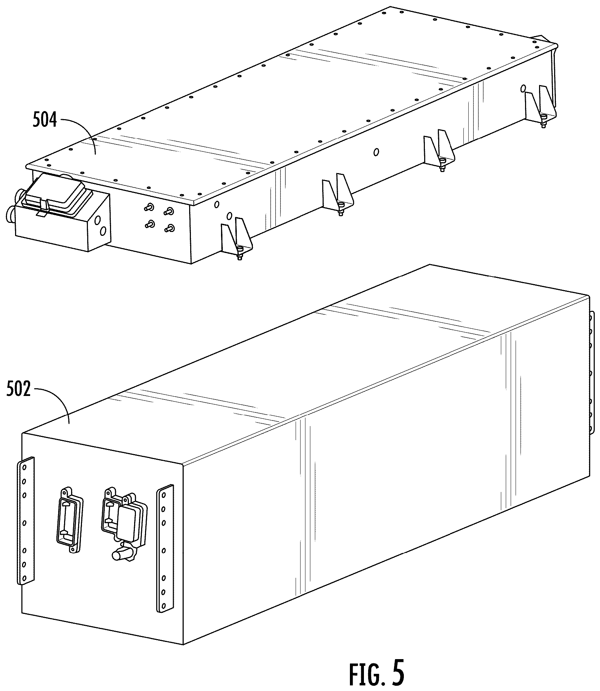

FIG. 5 illustrates an energy module 502 and a conversion module 504 being in separate enclosures. As shown in FIG. 5, the energy module 502 and the conversion module 504 are each disposed in a separate enclosure (rather than being combined into one enclosure). Accordingly, to produce a desired voltage, the energy module 502 and the conversion module 504 must be properly coupled (e.g., electrically and/or mechanically). With separate enclosures, however, numerous vulnerabilities exist, such as the energy module 502 being improperly sealed, the conversion module 504 being improperly sealed, the conversion module 504 and the energy module 502 becoming mechanically decoupled, the conversion module 504 and the energy module 502 becoming electrically decoupled, someone improperly coupling an incorrect conversion module to an incorrect energy module, and/or the like. In addition, in implementations in which an existing vehicle (e.g., a mining haul truck) is retrofitted to include an electric power system, space for the electric power system can be limited. In such implementations, having the energy module 502 and the conversion module 504 in separate enclosures can be an inefficient use of space, which in turn, may limit the number of battery packs included in each energy module 502.

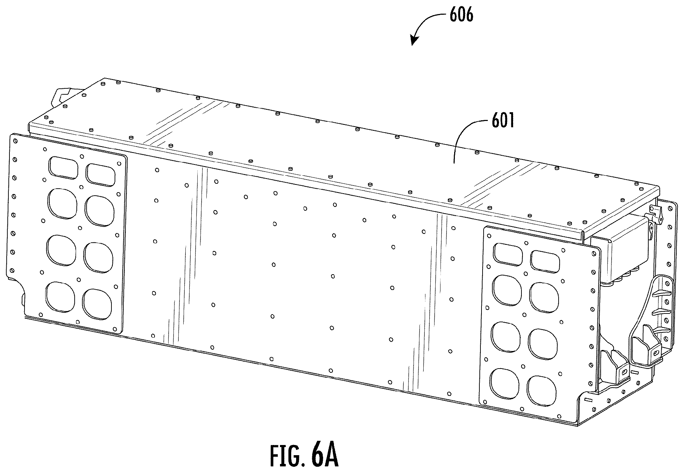

In contrast, FIG. 6A illustrates a power string module 606, according to an implementation. In some implementations, the power string module 606 includes an energy module and a conversion module in a single enclosure 601. In such a configuration, the deficiencies discussed with respect to FIG. 5 are mitigated (and even eliminated in at least some instances).

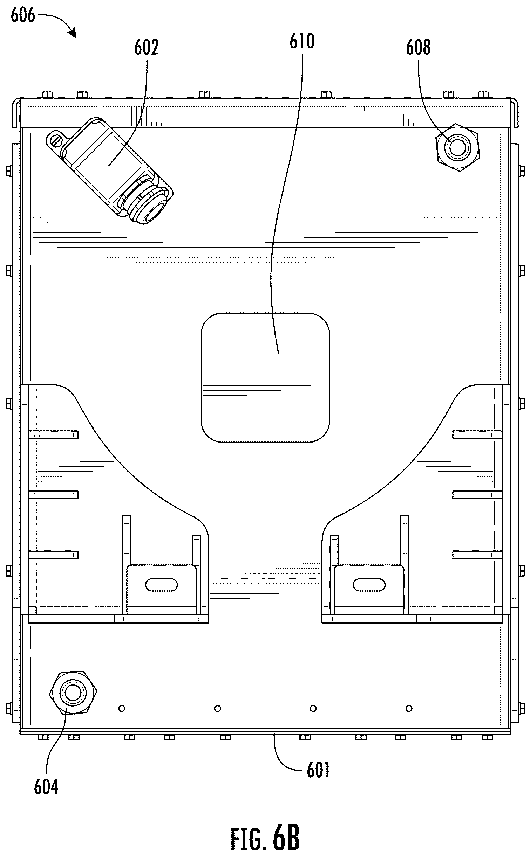

FIG. 6B illustrates an inboard view of the power string module 606. The power string module 606 and/or at least the inboard side of the enclosure 601 can include, for example, a low voltage bundle 602, coolant inlet port 604, a coolant outlet port 608, and a vent 610. The low voltage bundle 602 can be and/or can include an interface, connection, input/output, etc., allowing the power string module 606 to electrically couple to one or more auxiliary or relatively low voltage components, devices, systems, etc. that don't require the high voltage levels associated powering the drive system of the vehicle. The coolant inlet port 604 can be configured to receive coolant (e.g., from a heat exchanger, chiller, and/or the like), which can be conveyed through the enclosure 601 to cool or otherwise remove heat from the components of the power string module 606. The coolant outlet port 608 can be configured to output and/or convey a flow of coolant out of the enclosure 601 or power string module 606 (e.g., an outlet flow of coolant after the coolant has absorbed heat from the components of the power string module 606). The vent 610 can be configured to allow for the flow of air into and/or out of the enclosure 601. In some implementations, the airflow passing through the enclosure 601 can further dissipate heat released by the components of the power string module 606, preventing overheating and ensuring the components remain cool for efficient operation. The coolant inlet port 604, coolant outlet port 608, and vent 610 can be used to maintain the power string module 606 within a predetermined, acceptable, and/or desirable temperature range, which can be particularly desirable for high power systems.

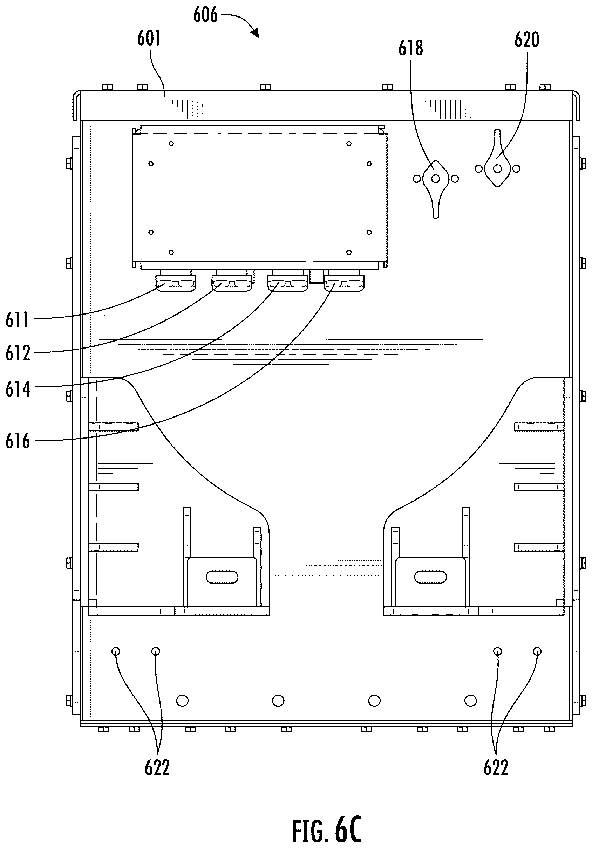

FIG. 6C illustrates an outboard view of the power string module 606. The power string module 606 and/or at least the outboard side of the enclosure 601 can include electrical interfaces such as a positive high voltage connector, port, terminal, etc. (HV+ terminal 611, a negative high voltage connector, port, terminal, etc. (HV- terminal 612), a positive high voltage auxiliary connector, port, terminal, etc. (HVAux+ terminal 614), and a negative high voltage auxiliary connector, port, terminal, etc. (HVAux- terminal 616). The power string module 606 and/or at least the outboard side of the enclosure 601 can further include, for example, one or more ground studs 622, a negative manual service disconnect (MSD- 618), and a positive manual service disconnect (MSD+ 620). The HV+ terminal 611 and the HV- terminal 612 can be used to connect the power string module 606 to a drive system that is configured to propel the vehicle (e.g., by converting the converted voltage into mechanical power to drive the wheels via one or more drive motors). The HVAux+ terminal 614 and HVAux- terminal 616 can be used to connect the power string module 606 to an auxiliary system that is configured to power vehicle components that are not part of the drive system. The ground studs 622 are configured to provide the power string module 606 with one or more ground connections. The MSD- 618 and MSD+ 620 can be configured to isolate a circuit or system from its power source (i.e., the battery packs included in the power string module 606).

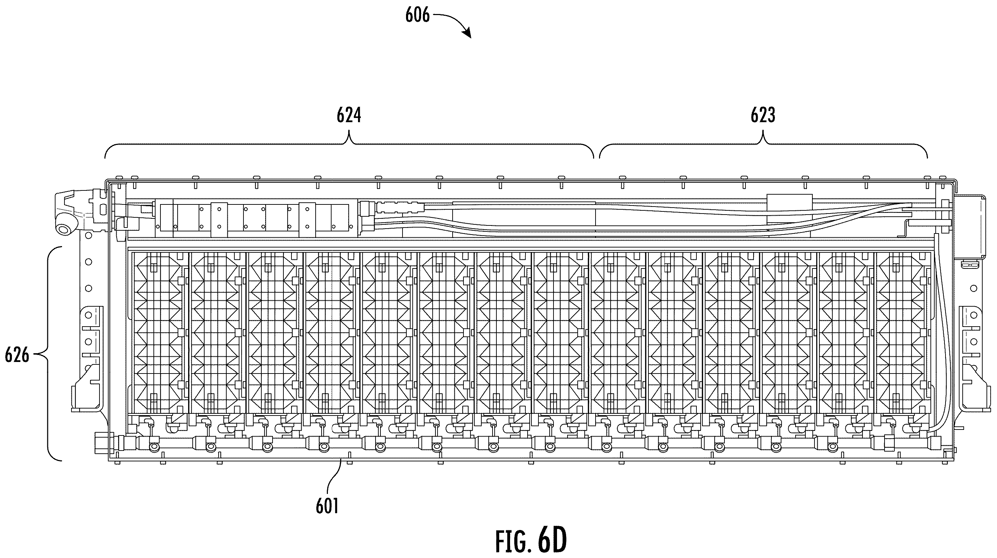

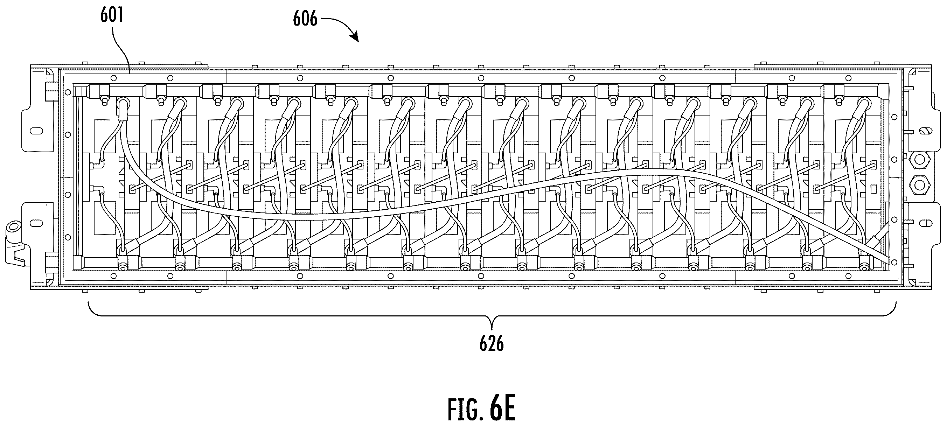

FIG. 6D illustrates various components of the power string module 606 disposed in the enclosure 601 (e.g., the enclosure 601 is shown as partially transparent). The power string module 606 includes battery packs 626, power string management components 623 (and/or devices), and conversion components 624 (and/or devices). In this implementation, the power string module 606 includes 14 battery packs. FIG. 6E illustrates a bottom view of the power string module 606 and shows the 14 battery packs and the wires or other interconnections that electrically connect the battery packs in series. While the power string module 606 is shown in FIGS. 6D and 6E as including 14 battery packs 626, in some implementations, the power string module 606 can include fewer or more than 14 battery backs.

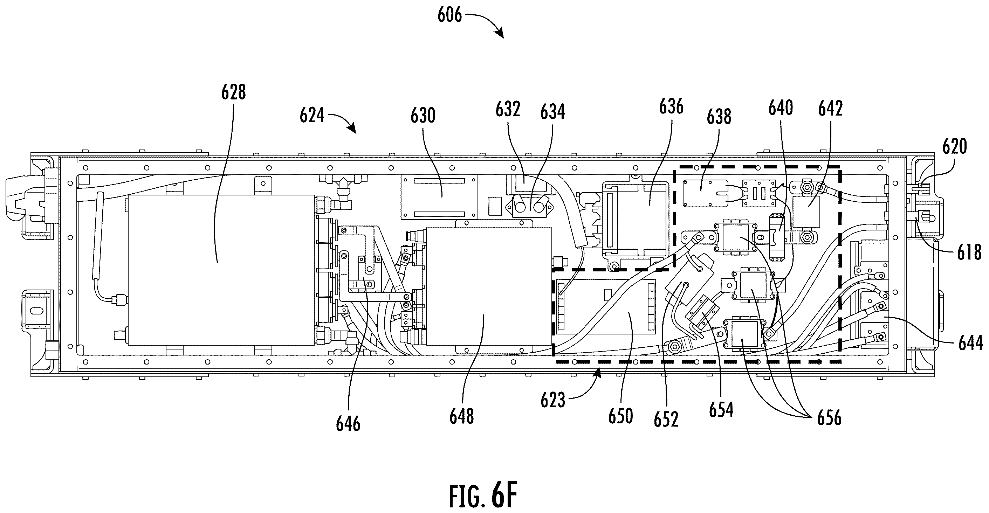

The power string module 606 is configured such that electric power (or voltage) can be sent between the battery packs 626 and an electric circuit including the power string management components 623 and the conversion components 624 and shown in detail in FIG. 6F. For example, the power string management components 623 (shown within the dashed line in FIG. 6F) can include, for example, a battery management system (BMS 650), structurally and/or functionally similar to the BMS 408 described above with reference to FIG. 4. The power string management components 623 can further include one or more insulation monitoring devices (ICM 638) configured to monitor the resistance between two or more conductors in the circuit, one or more current sensors 640 configured to sense current along at least a portion of the circuit, one or more fuses 642 configured to protect at least a portion of the electric components from overcurrent conditions, one or more voltage transducers 652 configured to sense voltage along at least a portion of the circuit, one or more resistors 654 configured to resist a portion of the flow of current along at least a portion of the circuit, and one or more contactors 656 configured to provide switching, for example, along high current/high voltage portions of the circuit. In one example, the power string management components 623 can cause the MSD- 618 and/or the MSD+ 620 (shown in FIG. 6C and 6F) to activate/isolate the power string module 606 in response to a predetermined set of criteria at the battery packs 626 and/or conversion components 624 (e.g., temperature, current, or voltage outside a predetermined acceptable range).

The conversion components 624 can include any suitable conversion hardware. For example, as shown in FIG. 6F, the conversion components 624 include an ultra-high voltage DC/DC converter (DCUHV 628), a high voltage DC/DC converter (DCHV 648), one or more diode 646, a low voltage distribution block 630, a regulator 632, an ethernet converter 634, and an electronic control unit (ECU 636). The DCUHV 628 and the DCHV 648 are electrically connected in series with the one or more diodes 646 therebetween. The conversion components 624 can be configured to receive power from the battery packs 626, convert and/or modify the energy received, and output a converted voltage to, for example, a high voltage bus bar 644 (e.g., which in turn, includes or is electrically connected to the HV+ terminal 611, the HV- terminal 612, the HVAux+ terminal 614, and the HVAux+ terminal 616 (collectively referred to as "the HV terminals")). Alternatively, during regeneration, the conversion components 624 can receive an input voltage from, for example, a retard grid or other suitable device (e.g., via the HV terminals and HV bus bar 644), convert and/or modify to the energy received, and output a converted voltage used to recharge the battery packs 626.

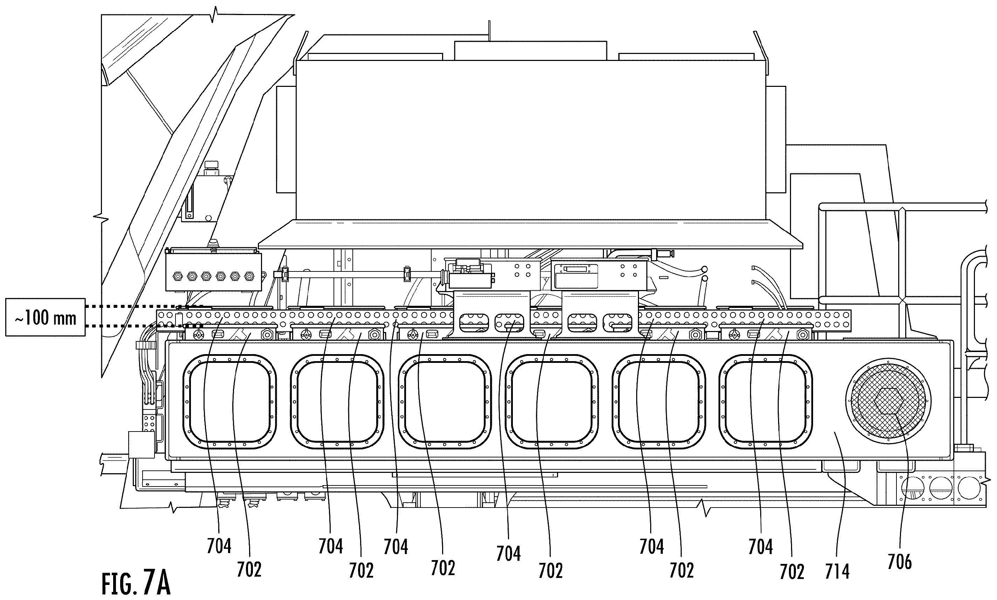

FIG. 7A illustrates an electric power system installed in a hybrid/electric or all-electric vehicle (e.g., a diesel/battery hybrid or all-electric mining truck). FIG. 7A includes the energy modules 702 and the conversion modules 704. As shown, each of the energy modules 702 and the conversion modules 704 have their own separate module/enclosure. Said differently, the energy modules 702 and the conversion modules 704 are separated into different enclosures.

FIG. 7A also illustrates that energy modules 702 are included in the enclosure/support structure 714, and the conversion modules 704, located above the energy modules 702, extend above the enclosure/support structure 714 in FIG. 7A. As indicated in FIG. 7A, a distance between the top of the energy modules 702 and the conversion modules 704 can be about 100 millimeters (mm). FIG. 7A also illustrates a cooling system 706. The cooling system 706 can be configured cool the energy modules 702 and/or the conversion modules 704. As illustrated in FIG. 7A, a single cooling system can be used.

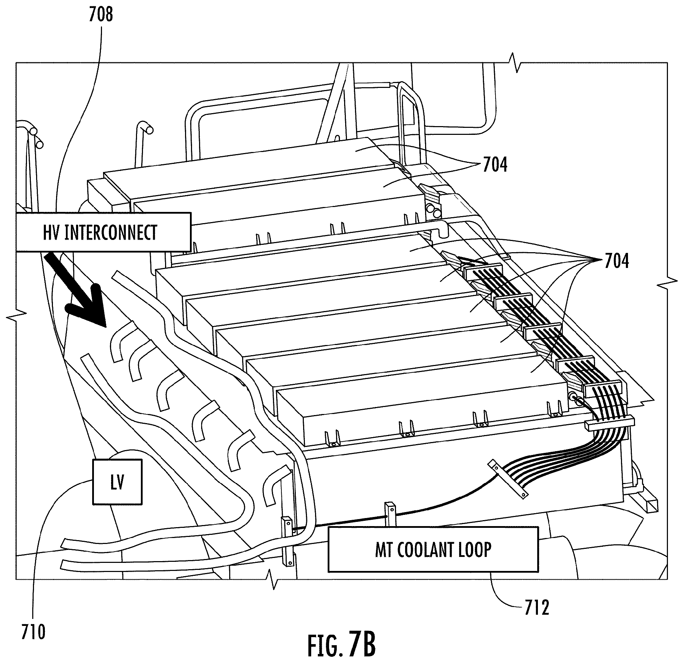

FIG. 7B illustrates a perspective inboard view of a vehicle that includes multiple conversion modules 704 and energy modules. The high voltage (HV) interconnect 708 is used to connect to voltage output. The low voltage (LV) components 710 indicate low voltage components that are not involved in powering the drive system of the vehicle (e.g., lights, radio, air conditioning, windows, and/or the like). The MT coolant loop 712 is used to cool the heat generated by a manual transmission using engine coolant circulating through a dedicated transmission cooler. FIG. 7B illustrates the conversion modules 704.

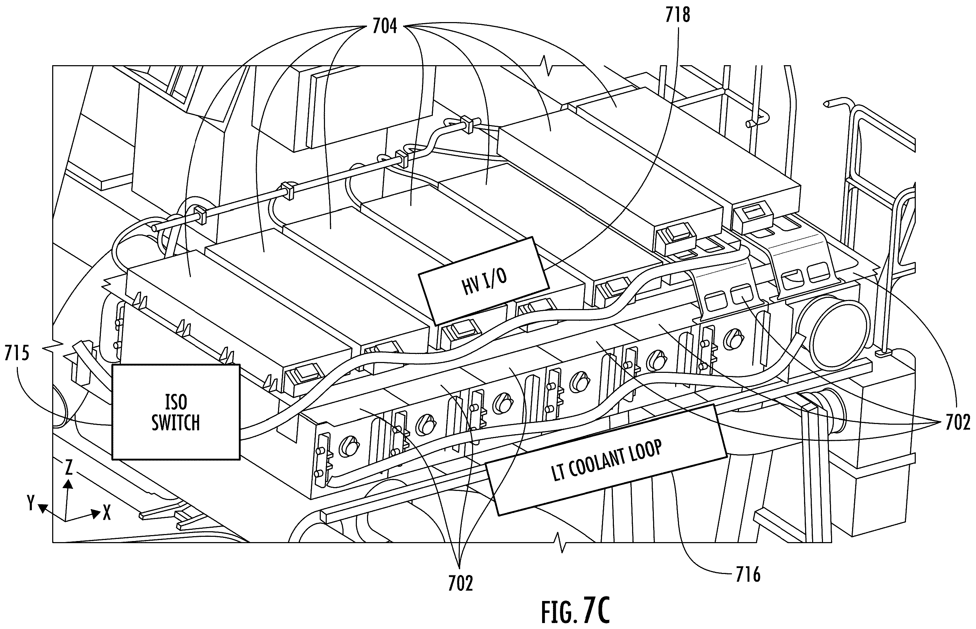

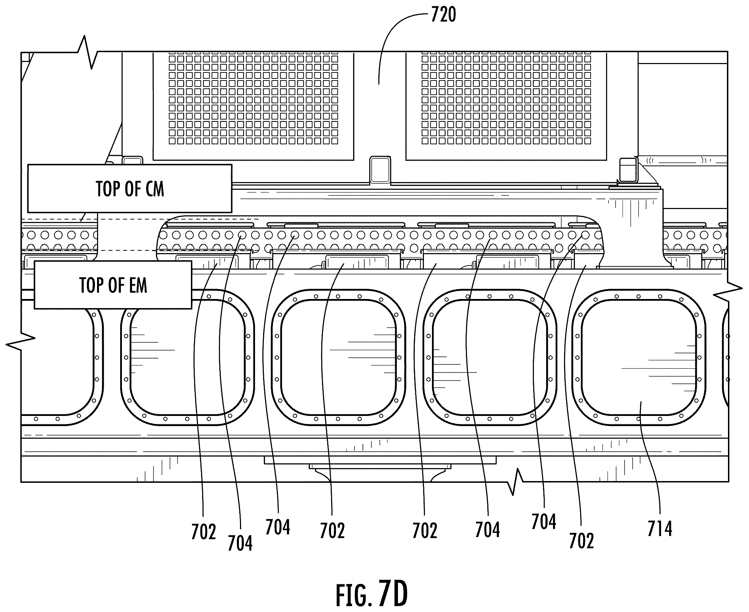

FIG. 7C illustrates an outboard view of the vehicle from FIG. 7B. The HV I/O 718 can be configured to send and/or receive data. The isolation switch 715 can be configured to serve as an isolation switch (e.g., to disconnect or reconnect the power string modules to other electrical components). Similarly stated, the isolation switch 715 can be configured to selectively isolate the electric power system (i.e., battery power system) from the electrical system of the truck. The LT coolant loop 716 can be configured to manage the temperature of the vehicle's transmission fluid. The energy modules 702 are located beneath the conversion modules 704. FIG. 7D illustrates an enlarged side view of a portion of the electric power system. FIG. 7D illustrates a retard grid 720 and supporting structure located above the energy modules 702, the conversion modules 704, and the enclosure/support structure 714. As illustrated in FIG. 7D, the retard grid 720 is closely located to the energy modules 702 and the conversion modules 704, which can be undesirable in some circumstances. For example, placing the retard grid 720 that close to the energy modules 702 and the conversion modules 704 can cause issues with heat management (e.g., components degrading due to excessive heat), electrical interference (e.g., EMI issues), impact (e.g., if the retard grid 720 bumps into the conversion module 704 or the energy module 702 (or vice versa)), and/or the like.

Moreover, when implemented in a mining haul truck, the tray of the truck can extend above the deck, which in turn, places a constraint on the height of components secured to the deck. In some implementations, raising the retard grid 720 to provide additional space between the retard grid 720 (or support structure thereof) and the conversion modules 704 may not be desirable. As such, the limited amount of space can place a limit on the size, number, and/or configuration of the battery packs included in the energy modules 702.

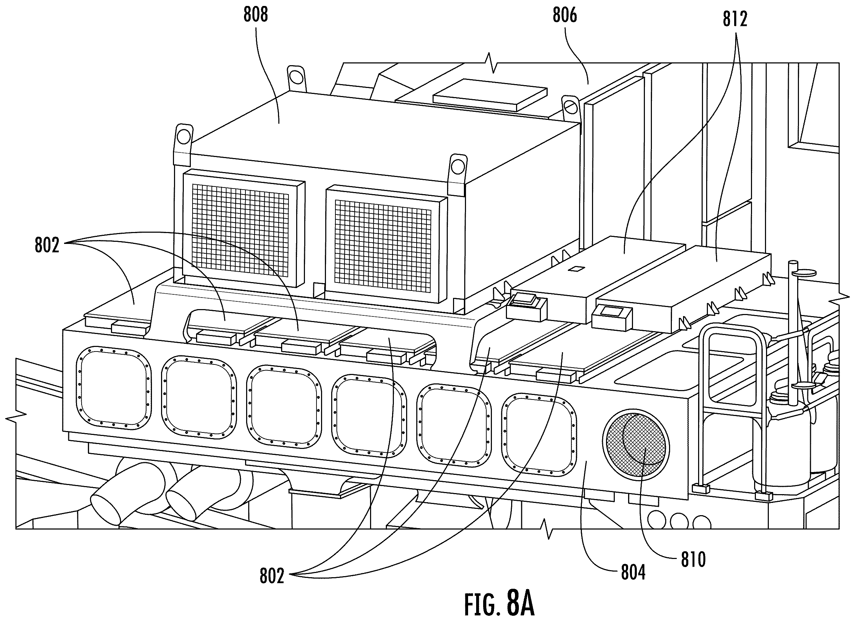

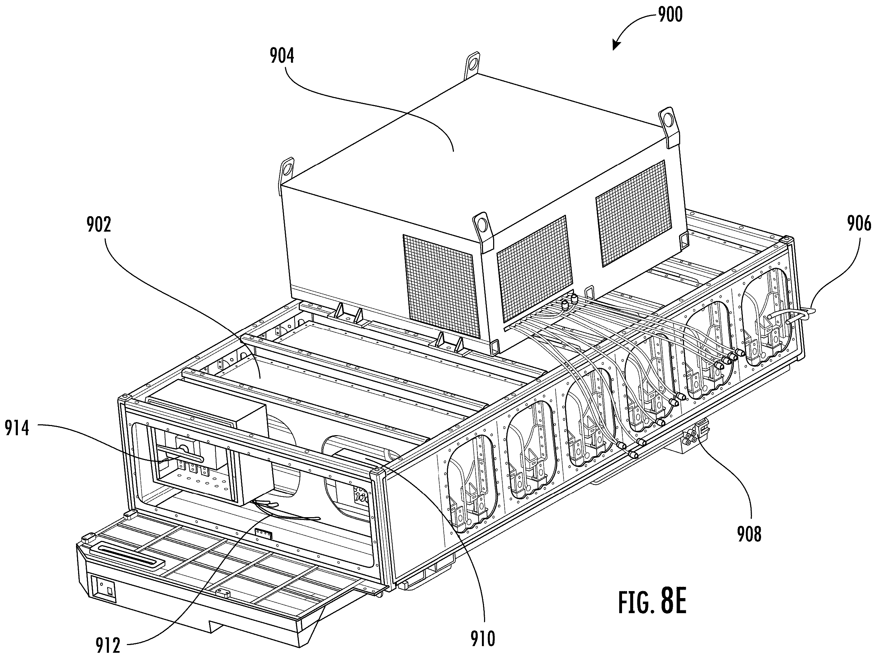

FIG. 8A illustrates a perspective outboard view of at least a portion of an electric power system of a vehicle including a set of power string modules, according to an implementation. FIG. 8A illustrates the power string modules 802, the enclosure/support structure 804, a cooling system 810, the electrical cabinet 806, the retard grid 808, and the converters 812. The cooling system 810 can be configured to maintain and/or modify a temperature of the power string modules 802. The retard grid 808 can be used to slow the vehicle or maintain a steady speed of the vehicle and can be used in the generation of electric power for recharging the battery packs included in the power string modules 802. The converters 812 are configured as high level converters/isolators to allow integration of the power string modules 802 into the existing electrical system of the vehicle (and/or with the retard/recharge/regenerative system). Although not shown, the electric power system can be electrically connected (e.g., via any number/type of interface(s)) to one or more components in the electrical cabinet 806.

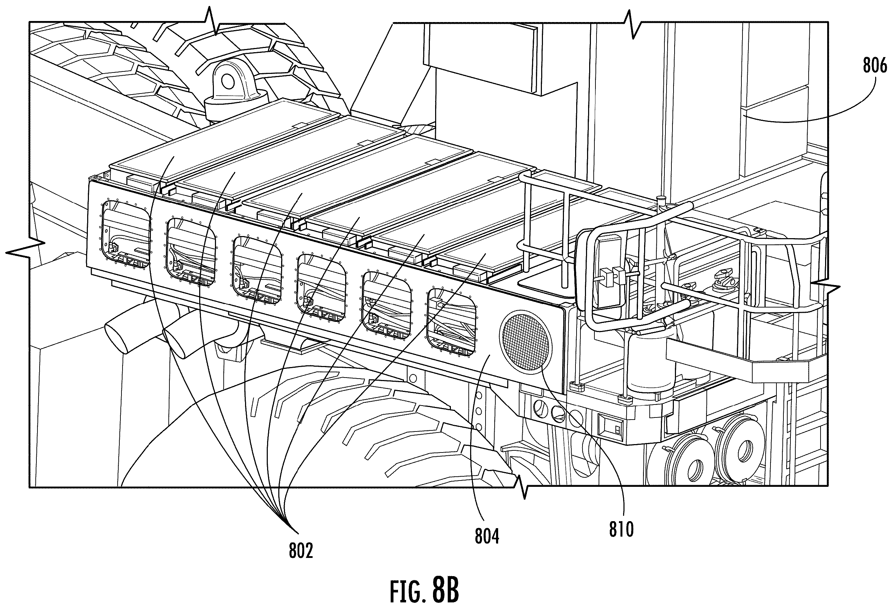

FIG. 8B illustrates a perspective outboard view of at least a portion of the electric power system of FIG. 8A with certain components removed to better show the power string modules. FIG. 8B illustrates the power string modules 802, the enclosure/support structure 804, the electrical cabinet 806, and the cooling system 810, but does not illustrate the retard grid 808 and the converters 812 from FIG. 8A. Together, the power string modules 802, the enclosure/support structure 804, the cooling system 810, the retard grid 808, and/or the converters 812 can work together to operate the vehicle in a manner that is less prone to failure and undesired risks, despite the challenges of retrofitting and powering large electric vehicles.

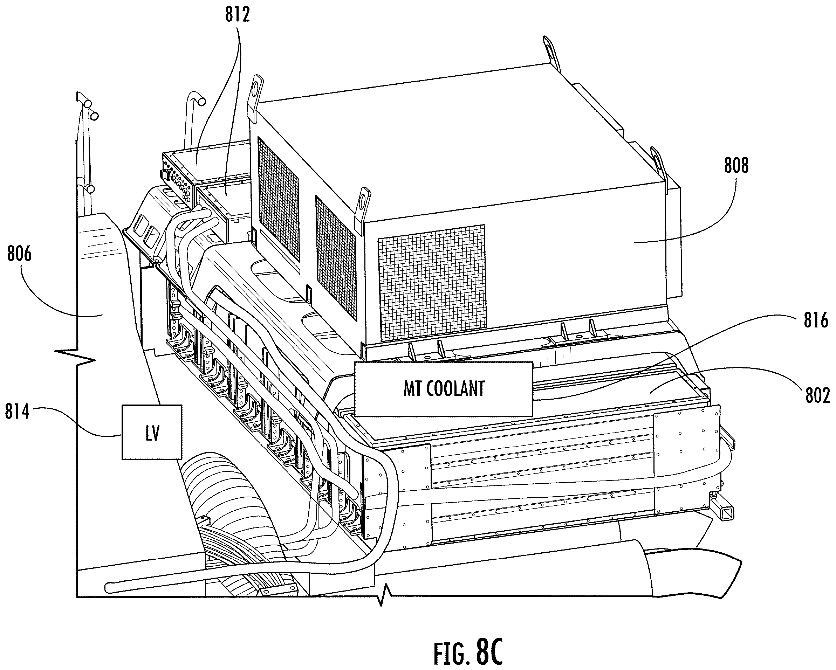

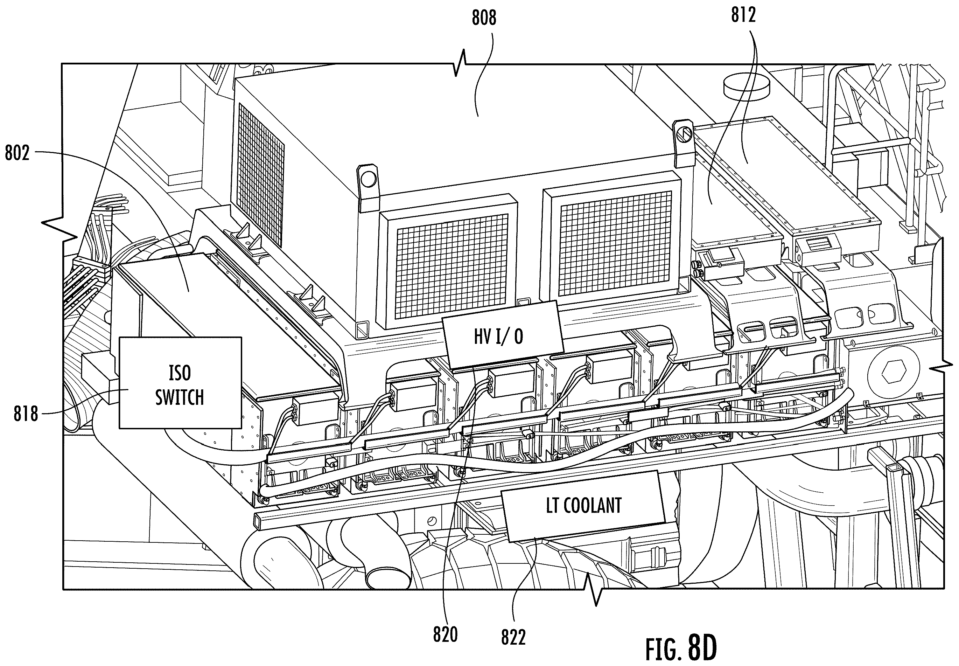

FIGS. 8C and 8D illustrates a perspective inboard view and a perspective outboard view, respectively, of the portion of the electric power system of FIG. 8A showing electrical connections associated with the multiple power string modules. The retard grid 808 is located above the power string modules 802. The MT coolant 816 and low voltage components 814 are located adjacent to the power string modules 802. In addition to the converters 812, the power string modules 802 and the retard grid 808, FIG. 8D illustrates a big isolation switch 818, HV I/O 820, and LT coolant 822.

FIG. 9 illustrates a perspective view of at least a portion of an electric power system 900, according to an implementation. The electric power system 900 can be modular or substantially modular, allowing the electric power system 900 to be used in any number of implementations. For example, in some implementations, the electric power system 900 can be used and/or installed on a right deck of a mining haul truck. In some implementations, the electric power system 900 can be used and/or installed in other large/industrial vehicles such as locomotives, marine vessels, airplanes, etc. In still some implementations, the electric power system 900 can be used and/or installed in a stationary power plant.

FIG. 9 illustrates the electric power system 900 including a number of power string modules 902, a retard grid 904, a DC link disconnect 906, a thermal management system tower disconnect (TMS disconnect 908), a compute module 910, an under deck routing channel 912, and an isolation switch 914. The retard grid 904 can be located above (e.g., but not in direct connect with) the power string modules 902. The retard grid 904 can be a dynamic brake system and/or any other regenerative energy system configured to output electric energy used to recharge the battery packs included in the power string modules 902. The isolation switch 914 can be configured to connect or disconnect the power string modules 902 to other electrical components of the vehicle. The compute module 910 can be in communication with the TMS disconnect 908 and the DC link disconnect 906 and can, for example, at least partially control one or more associated components thereof. For example, the TMS disconnect908 can be configured to monitor a temperature of the power string modules 902 and the DC link disconnect 906 can be configured to monitor a DC voltage at or associated with an output of the power string modules 902. In some implementations, the compute module 910 can receive an indication of a temperature at the power string modules 902 from the TMS disconnect 908 and/or an indication of a DC voltage level at or associated with the output of the power string modules 902 from the DC link disconnect 906. When each of the temperature and the DC voltage level are within a predetermined, desired, and/or acceptable range, the compute module 910 can control or otherwise allow the isolation switch 914 to be closed, thereby connecting the power string modules 902 to one or more external circuits (e.g., of the vehicle). Conversely, in response to either or both the temperature or the DC voltage level being outside the predetermined, desired, and/or acceptable temperature or DC voltage level range, respectively, the compute module 910 can send a signal to the isolation switch 914 to cause the isolation switch 914 to open, thereby disconnecting the power string modules 902 from the one or more external circuits.

All combinations of the foregoing concepts and additional concepts discussed herein (provided such concepts are not mutually inconsistent) are contemplated as being part of the subject matter disclosed herein. The terminology explicitly employed herein that also can appear in any disclosure incorporated by reference should be accorded a meaning most consistent with the particular concepts disclosed herein.

The drawings are primarily for illustrative purposes, and are not intended to limit the scope of the subject matter described herein. The drawings are not necessarily to scale; in some instances, various aspects of the subject matter disclosed herein can be shown exaggerated or enlarged in the drawings to facilitate an understanding of different features.

The entirety of this application (including the Cover Page, Title, Headings, Background, Summary, Brief Description of the Drawings, Detailed Description, Implementations, Abstract, Figures, Appendices, and otherwise) shows, by way of illustration, various examples in which the implementations can be practiced. The advantages and features of the application are of a representative sample of implementations only, and are not exhaustive and/or exclusive. Rather, they are presented to assist in understanding and teach the implementations, and are not representative of all implementations. As such, certain aspects of the disclosure have not been discussed herein. That alternate implementations cannot have been presented for a specific portion of the innovations or that further undescribed alternate implementations can be available for a portion is not to be considered to exclude such alternate implementations from the scope of the disclosure. It will be appreciated that many of those undescribed implementations incorporate the same principles of the innovations and others are equivalent. Thus, it is to be understood that some implementations can be utilized, and functional, logical, operational, organizational, structural, and/or topological modifications can be made without departing from the scope and/or spirit of the disclosure. As such, all examples and/or implementations are deemed to be non-limiting throughout this disclosure.

Also, no inference should be drawn regarding those implementations discussed herein relative to those not discussed herein other than it is as such for purposes of reducing space and repetition. For example, it is to be understood that the logical and/or topological structure of any combination of any program components (a component collection), other components and/or any present feature sets as described in the figures and/or throughout are not limited to a fixed operating order and/or arrangement, but rather, any disclosed order is exemplary and all equivalents, regardless of order, are contemplated by the disclosure.

Various concepts can be embodied as one or more methods, of which at least one example has been provided. The acts performed as part of the method can be ordered in any suitable way. Accordingly, implementations can be constructed in which acts are performed in an order different than illustrated, which can include performing some acts simultaneously, even though shown as sequential acts in illustrative implementations. Put differently, it is to be understood that such features can not necessarily be limited to a particular order of execution, but rather, any number of threads, processes, services, servers, and/or the like that can execute serially, asynchronously, concurrently, in parallel, simultaneously, synchronously, and/or the like in a manner consistent with the disclosure. As such, some of these features can be mutually contradictory, in that they cannot be simultaneously present in a single implementation. Similarly, some features are applicable to one aspect of the innovations, and inapplicable to others.

In addition, the disclosure can include other innovations not presently described. Applicant reserves all rights in such innovations, including the right to implementation such innovations, file additional applications, continuations, continuations-in-part, divisionals, and/or the like thereof. As such, it should be understood that advantages, implementations, examples, functional, features, logical, operational, organizational, structural, topological, and/or other aspects of the disclosure are not to be considered limitations on the disclosure as defined by the implementations or limitations on equivalents to the implementations. Depending on the particular desires and/or characteristics of an individual and/or enterprise user, database configuration and/or relational model, data type, data transmission and/or network framework, syntax structure, and/or the like, various implementations of the technology disclosed herein can be implemented in a manner that enables a great deal of flexibility and customization as described herein.

All definitions, as defined and used herein, should be understood to control over dictionary definitions, definitions in documents incorporated by reference, and/or ordinary meanings of the defined terms.

The indefinite articles "a" and "an," as used herein in the specification and in the implementations, unless clearly indicated to the contrary, should be understood to mean "at least one."

The phrase "and/or" as used herein in the specification and in the implementations, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements can optionally be present other than the elements specifically identified by the "and/or" clause, whether related or unrelated to those elements specifically identified. Thus, as a non-limiting example, a reference to "A and/or B," when used in conjunction with open-ended language such as "comprising" can refer, in one implementation, to "A" only (optionally including elements other than "B"); in another implementation, to "B" only (optionally including elements other than "A"); in yet another implementation, to both "A" and "B" (optionally including other elements); etc.

As used herein in the specification and in the implementations, "or" should be understood to have the same meaning as "and/or" as defined above. For example, when separating items in a list, "or" or "and/or" shall be interpreted as being inclusive (i.e., the inclusion of at least one, but also including more than one) of a number or list of elements, and, optionally, additional unlisted items. Only terms clearly indicated to the contrary, such as "only one of" or "exactly one of," or, when used in the implementations, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of." "Consisting essentially of," when used in the implementations, shall have its ordinary meaning as used in the field of patent law.

As used herein in the specification and in the implementations, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements can optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one implementation, to at least one, optionally including more than one, A, with no B present (and optionally including elements other than B); in another implementation, to at least one, optionally including more than one, B, with no A present (and optionally including elements other than A); in yet another implementation, to at least one, optionally including more than one, A, and at least one, optionally including more than one, B (and optionally including other elements); etc.

## Claims

1. An apparatus, comprising:
an enclosure (101A, 101B);
an energy module (104A, 104B) included in the enclosure and that includes a battery pack configured to provide an initial voltage; and
a conversion module (106A, 106B) included in the enclosure and that includes a high voltage DC/DC converter (108A, 108B) and an ultra-high voltage DC/DC converter (110A, 110B), the conversion module configured to receive the initial voltage and output a converted voltage using the high voltage DC/DC converter and the ultra-high voltage DC/DC converter.

2. The apparatus of claim 1, wherein the high voltage DC/DC converter (108A, 108B) is configured to receive the initial voltage and to generate an intermediate voltage, and the ultra-high voltage DC/DC converter (110A, 110B) is configured to receive the intermediate voltage and to generate the converted voltage.

3. The apparatus of claim 1 or 2, wherein the enclosure is a single enclosure.

4. The apparatus of any of the preceding claims, wherein the enclosure (101A, 101B) is configured to protect a proper orientation of the energy module and the conversion module.

5. The apparatus of any of the preceding claims, wherein the energy module (104A, 104B) and the conversion module (106A, 106B) are electrically coupled and positioned within the enclosure such that one or more creepage requirements or clearance requirements are satisfied.

6. The apparatus of any of the preceding claims, wherein the energy module is a first energy module (104A), the conversion module is a first conversion module (106A), and the first energy module and the first conversion module are included in a first power string module (102A) included in the enclosure, the apparatus further comprising:
a second energy module (104B); and
a second conversion module (106B), the second energy module and the second conversion module included in a second power string module (102B) included in the enclosure.

7. The apparatus of claim 6, wherein the first power string module (102A) is positioned within a first enclosure (101A) and the second energy module (104B) is positioned within a second enclosure (101B).

8. The apparatus of any of the preceding claims, wherein the enclosure is an apparatus enclosure, the energy module is a first energy module, and the conversion module is a first conversion module, the first energy module and the first conversion module included in a first power string module, the first power string module positioned within a first enclosure, and the apparatus further comprising:
a second energy module; and
a second conversion module electrically coupled to the second energy module, wherein the second energy module and the second conversion module are positioned within a second enclosure, and wherein:
the first enclosure and the second enclosure are positioned within the apparatus enclosure.

9. The apparatus of claim 8, wherein:
the first energy module and the first conversion module are included in a first power string module positioned within the first enclosure;
the second energy module and the second conversion module are included in a second power string module positioned within the second enclosure; and
the first enclosure and the second enclosure are removably positioned within the apparatus enclosure, such that the first power string module and the second power string module are selectively removable from the apparatus.

10. An electric power system comprising:
a power source electrically coupled to a high voltage routing channel and the electric power system and configured to generate electrical power, the power source comprising:
a plurality of energy modules (104A, 104B) configured to generate an initial voltage;
a plurality of conversion modules (106A, 106B) each electrically coupled to an energy module of the plurality of energy modules, the plurality of conversion modules configured to receive the initial voltage and generate a converted voltage, and wherein:
each energy module and coupled conversion module define a power string module (102A, 102B) of a plurality of power string modules;
each power string module is positioned within an enclosure (101A, 101B) of a plurality of enclosures; and
each power string module is electrically coupled to the high voltage routing channel.

11. The electric power system of claim 10, wherein:
the plurality of enclosures are removably coupled to the power source, such that the plurality of power string modules are selectively removable from the power source; and/or
each power string module of the plurality of power string modules are positioned within a respective enclosure of the plurality of enclosures and coupled to the high voltage routing channel such that each power string module can be removed and replaced within the electric power system by removing and replacing one or more enclosures of the plurality of enclosures.

12. The electric power system of claim 10 or 11, the plurality of energy modules further comprising:
a plurality of battery packs configured to generate the initial voltage; and
one or more battery management systems operably coupled to the plurality of battery packs and configured to selectively engage the plurality of battery packs.

13. The electric power system of claim 12, the plurality of conversion modules further comprising:
a switch configured to electrically engage the conversion model with a corresponding energy module;
a plurality of DC/DC converters configured to receive the initial voltage and generate the converted voltage;
a battery management system regulator configured to regulate the one or more battery management systems of the corresponding energy module; and
a battery power string controller configured to control at least one of the plurality of battery packs or the one or more battery management systems of the corresponding energy module, wherein:
the energy module and the conversion module are positioned within the enclosure such that one or more creepage requirements or clearance requirements are satisfied.

14. A method, including:
providing, via a first module (104A) included in an enclosure (101A), an initial voltage;
receiving, at a first DC/DC converter (108A) included in the enclosure, the initial voltage to generate an intermediate voltage; and
receiving, at a second DC/DC converter (110A) included in the enclosure, the intermediate voltage to generate a converted voltage.

15. The method of claim 14, wherein:
the enclosure is included in a diesel/battery hybrid vehicle, and wherein the diesel/battery hybrid vehicle is optionally one of a mining haul truck, a locomotive, or a marine vessel; and/or
the first module is a first energy module, comprising one or more battery packs configured to generate the initial voltage and one or more battery management systems configured to selectively connect and disconnect the one or more battery packs; and/or
the first DC/DC converter and the second DC/DC converter are included in a first conversion module, the first conversion module further comprising a switch, a battery management system regulator, and a battery power string controller, the first conversion module configured to receive the initial voltage and generate the converted voltage.
